(19) Europäisches Patentamt
European Patent Office
Office européen des brevets

(11) **EP 1 355 532 B1**

(12) **FASCICULE DE BREVET EUROPEEN**

(45) Date de publication et mention
de la délivrance du brevet:
**02.01.2008 Bulletin 2008/01**

(21) Numéro de dépôt: **01974421.8**

(22) Date de dépôt: **02.10.2001**

(51) Int Cl.:
***A01N 59/26*** *(2006.01)*    ***A01N 47/04*** *(2006.01)*

(86) Numéro de dépôt international:
**PCT/FR2001/003038**

(87) Numéro de publication internationale:
**WO 2002/060259 (08.08.2002 Gazette 2002/32)**

(54) **COMPOSITION FONGICIDE A BASE DE PHOSPHITE ACIDE DE POTASSIUM**

FUNGIZIDE ZUSAMMENSETZUNG AUF DER BASIS VON SAUREM KALIUMPHOSPHIT

FUNGICIDAL COMPOSITION BASED ON POTASSIUM ACID PHOSPHITE

(84) Etats contractants désignés:
**AT BE CH CY DE DK ES FI FR GB GR IE IT LI LU
MC NL PT SE TR**

(30) Priorité: **31.01.2001 FR 0101283
02.07.2001 FR 0108727**

(43) Date de publication de la demande:
**29.10.2003 Bulletin 2003/44**

(73) Titulaire: **SOYEZ, Jean-Louis
F-75012 Paris (FR)**

(72) Inventeur: **SOYEZ, Jean-Louis
F-75012 Paris (FR)**

(74) Mandataire: **Sauvage, Renée
Cabinet Sauvage
65, Boulevard Soult
75012 Paris (FR)**

(56) Documents cités:
**EP-A- 0 230 209      WO-A-00/76941
DE-A- 3 702 769      FR-A- 2 252 056
GB-A- 2 279 252      US-A- 5 997 910**

• **DATABASE CROPU [en ligne] EFFECT OF PH ON
IN VITRO ACTIVITY OF FOSETYL-AL ON
PHYTOPHTHORA PALMIVORA MF4: retrieved
from STN-INTERNATIONAL, accession no.
1989-83219 CROPU XP002179202 &
ANN.APPL.BIOL., vol. 114,Suppl., 1989, pages
34-35,**
• **DATABASE CA [en ligne] CHEMICAL
ABSTRACTS SERVICE, COLUMBUS, OHIO, US;
M.CHAZALET ET AL.: "Results of experiments
using ethyl phosphites against various vine
diseases" retrieved from STN-INTERNATIONAL,
accession no. 88:184442 CA XP002186154 &
PHYTIATR.-PHYTOPHARM., vol. 26, no. 1, 1997,
pages 41-54,**

Remarques:
Le dossier contient des informations techniques présentées postérieurement au dépôt de la demande et ne figurant pas dans le présent fascicule.

**EP 1 355 532 B1**

**Description**

Utilisation d'une composition fongicide à base de phosphite acide de potassium pour la lutte contre les maladies cryptogamiques des plantes, et procédé de traitement.

La présente invention a pour objet l'utilisation d'une composition fongicide pour la lutte contre les maladies cryptogamiques des plantes et, en particulier contre le mildiou et l'oïdium de la vigne.

Plus précisément, elle concerne l'utlisation d'une composition à base d'un phosphite métallique à vocation fertilisante.

US 5 997 910 ainsi que WO 00 76941 décrivent une formulation fertilisante à base de phosphore et de potassium.

FR-A-2 252 056 divulgue des compositions fongicides à base d'acide phosphoreux ou de sels métalliques de cet acide. Si le mildiou est cité dans ce document, en revanche, il n'y est pas question des cryptogames de la famille des Erysiphacées (oïdium et autres "blancs"). Parmi les sels mentionnés, on trouve, en particulier, le phosphite acide de potassium ou monopotassique $KH_2PO_3$. FR-A-2 252 056 enseigne que l'acide phosphoreux et le phosphite de monopotassium à pH 4 possèderaient d'excellentes propriétés fongicides.

Aucune composition fongicide correspondante n'a cependant jamais été mise dans le commerce, les phosphites selon FR-A-2 252 056 ayant été immédiatement supplantés par la découverte des propriétés d'un autre phosphite, toujours commercialisé avec succès depuis plus de vingt ans, le monoéthylphosphite d'aluminium, connu sous le nom de foséthyl-Al.

L'article de Ramachandran N. et al. intitulé "Effect of pH on in vitro activity of fosethyl-Al on phytophthora palmivora" étudie l'effet du pH sur l'activité du foséthyl-Al.

L'article de Chazalet M. et al. intitulé "Results of experiments using ethyl phosphites against various vine diseases" présente l'effet synergique du foséthyl-A1 et du folpel.

Le demandeur a découvert de façon tout à fait inattendue que, dans certaines conditions, le phosphite acide de potassium est considérablement plus actif que le foséthyl-Al, tant à titre préventif qu'à titre curatif.

Plus précisément, l'invention porte sur l'utilisation d'une composition fongicide à base d'acide phosphoreux à l'état libre et de phosphite acide de potassium dans une gamme de rapport de concentration telle que la composition a un pH compris entre 1 et 3, en association avec un ou plusieurs fongicides stables ou stabilisés au pH concerné.

Il a en effet été constaté que le niveau du pH est essentiel à l'obtention de l'effet constaté.

Comme le foséthyl-Al, la composition utilisée dans l'invention est à utiliser comme complément d'un traitement de base (par exemple, un traitement au folpel) contre le mildiou en viticulture et les autres cultures où le mildiou peut être un problème. La composition selon l'invention pourra donc être utilisée comme adjuvant formulant (c'est-à-dire coformulée en mélange prêt à l'emploi avec un ou plusieurs fongicides stables ou stabilisés au pH considéré) ou comme adjuvant pour bouillie (c'est-à-dire mélangée par l'utilisateur avec le programme fongicide de son choix).

L'invention sera mieux comprise et ses avantages apparaîtront plus clairement à la lecture des essais comparatifs rapportés ci-après.

Exemple 1 : Essai in vitro

A titre préliminaire, il a été effectué un essai sur une souche se développant bien en laboratoire, Phytophtora infestans de la pomme de terre (souche R 22-94).

On a testé comparativement :

- comme composé de référence, le produit du commerce Aliette (qui est du foséthyl-Al à 80%) à raison de 500, 1.000, 2.500 et 10.000 μg d'Aliette/ml d'eau ;
- diverses préparations de phosphite de potassium en solutions à 500, 250, 500, 1.000 et 2.000 μg de préparation/ml d'eau, le pH de chaque préparation étant ajusté à une valeur déterminée en jouant sur l'éventuel excès d'acide phosphoreux :

  • préparation 1 : pH 8 ; cette préparation, qui correspond au phosphite dipotassique, est utilisée dans divers pays européens ;
  • préparation 2 : pH 5 ; cette préparation, qui correspond au phosphite monopotassique, est sensiblement celle qui fait l'objet de FR-A-2 252 056 ;
  • préparation 3 : pH 2 ; cette préparation correspond à une combinaison phosphite acide de potassium / acide phosphoreux libre selon l'invention.

Après stérilisation, on a ajouté, à du milieu Rye B-Agar maintenu en surfusion à 50°C, respectivement 20 ml du composé de référence et 20 ml de chacune des préparations indiquées ci-dessus et on a coulé le milieu ainsi supplémenté dans des boîtes de Pétri (3 boites par cas) . A titre de témoin, on a également travaillé sur des boîtes de Pétri (3 boîtes) contenant le même milieu mais sans adjonction ni du composé de référence, ni de préparation à base de phosphite potassique.

Après refroidissement, on a ensemencé chaque boîte de Pétri en son centre avec un implant mycélien standard de 6 mm de diamètre prélevé en périphérie d'une colonie de Phytophtora infestans en phase exponentielle de croissance et on les a placées en incubation à 19°C, à l'obscurité.

Les diamètres des plages mycéliennes ont été mesurés quotidiennement afin d'apprécier la phase de croissance linéaire. C'est dans cette phase de croissance linéaire qu'ont été déterminés les pourcentages d'inhibition de la croissance radiale de la souche de Phytophtora infestans selon la formule suivante :

$$I = 100 \ (Ro-Ri)/Ro$$

où $\mu$Ro représente la croissance mycélienne radiale dans le cas du témoin et Ri la croissance mycélienne radiale en présence du produit testé (Aliette ou préparation à base de phosphite potassique).

Les pourcentages d'inhibition ont été déterminés après 11 jours de culture.

Les doses efficaces 50 ($DE_{50}$) et 95 ($DE_{95}$), c'est-à-dire les doses qui inhibent respectivement 50 et 95% de la croissance mycélienne, ont été calculées d'après les régressions linéaires des pourcentages d'inhibition ("I" dans la formule ci-dessus) en fonction des logarithmes base 10 des concentrations en produits testés.

Ces $DE_{50}$ et $DE_{95}$, exprimées en $\mu$g/ml, sont résumées ci-dessous :

| Produit testé | $DE_{50}$ | $DE_{95}$ |
|---|---|---|
| Aliette | 637 | 1.758 |
| Préparation 1 (pH 8) | 297 | 5.275 |
| Préparation 2 (pH 5) | 500 | 2.066 |
| Préparation 3 (pH 2) | 94 | 224 |

Il ressort des résultats ci-dessus que, comparée à celle de l'Aliette, l'activité in vitro de la préparation 2 (FR-2 256 056) est du même ordre que celle de l'Aliette en $DE_{50}$ et en $DE_{95}$ vis-à-vis de la souche de Phytophtora infestans.

Pour la préparation 3, on observe que cette efficacité en $DE_{50}$ et en $DE_{95}$ est égale respectivement à 6,78 fois et 7,85 fois à celle de l'Aliette.

On observe en outre que l'efficacité en $DE_{50}$ et en $DE_{95}$ de la préparation 3 (pH très acide) est égale respectivement 3,16 fois et 23,55 fois celle du préparation 1 (pH légèrement basique).

Exemple 2 : Essai in vitro

Pour préciser les résultats observés à pH 2 à l'exemple 1, on a mis en oeuvre un test similaire sur des préparations supplémentaires $KH_2PO_3$ / $H_3PO_3$ et l'on a obtenu les résultats suivants :

| Produit testé | $DE_{50}$ | Rapport $DE_{50}$ Réf./Prép. | $DE_{95}$ | Rapport $DE_{95}$ Réf./Prép. |
|---|---|---|---|---|
| Réf. : Aliette | 720 | - | 1.810 | - |
| Préparation 4 (pH 4) | 472 | 1,53 | 1.605 | 1,13 |
| Préparation 5 (pH 3) | 222 | 3,24 | 801 | 2,26 |
| Préparation 6 (pH 2) | 110 | 6,55 | 235 | 7,70 |
| Préparation 7 (pH 1) | 82 | 8,78 | 151 | 11,9 |

Ces résultats montrent qu'à pH inférieur à 4, les préparations offrent toutes une activité supérieure à celle de l'Aliette que ce soit en $DE_{50}$ ou en $DE_{95}$ et que la supériorité des préparations va croissant avec l'acidité, la différence étant particulièrement marquée en $DE_{95}$.

Exemple 3 : Essai in vivo au vignoble

L'essai a été mené, sous le sceau de la confidentialité, par le Service Régional de la Protection des Végétaux de Bourgogne, à Beaune, sur Aligoté/S04.

On a testé comparativement pour son efficacité contre Plasmopara viticola :

- à titre de compositions testées :

  • la préparation 3 de l'exemple 1, seule, dosée à 250 g (exprimé en $PO_3^-$)/litre de solution aqueuse, et
  • la préparation 3 de l'exemple 1, au même dosage de 250 g/l, mais additionnée extemporanément avec le folpel à la dose homologuée (1.500 g/ha), c'est-à-dire la préparation 3 utilisée en adjuvant de bouillie,

- à titre de référence, le produit du commerce Mikal qui est une formulation foséthyl-Al (2.000 g) / folpel (1.000 g) / matière inerte (1000 g), ce qui équivaut à 1.500 g de $PO_3^-$ pour 4.000 g de Mikal ;
- à titre de témoin, du folpel seul, à la dose homologuée.

La préparation 3, seule ou combinée au folpel, est appliquée à raison de 1 litre à l'hectare, soit 250 g $PO_3^-$ /ha et à la dose homologuée du folpel.

La référence Mikal est appliquée à raison de 4 kg/ha, soit 1.500 g $PO_3^-$/ha et à la dose homologuée de folpel.

Le test a été effectue de fin mai à début juillet, avec un traitement tous les 14 jours. A l'issue de cette période, on a compté le nombre de feuilles tachées et le nombre de taches et l'on a attribué un code statistique allant de a (peu) à e (beaucoup) aux résultats obtenus, comme suait :

| Traitement | Feuilles tachées | | Taches | |
|---|---|---|---|---|
| | Nombre | Classement | Nombre | Classement |
| Néant | 298 | d | 1.307 | e |
| **Référence (Mikal)** | **3** | **a** | **9,4** | **b** |
| Folpel | 18,2 | b | 98 | c |
| Prépar. 3 | 160 | c | 553 | d |
| **Prépar. 3 + folpel** | **3** | **a** | **5,2** | **a** |

Comme il ressort de ces résultats, l'addition de la préparation 3 au programme de base permet d'améliorer significativement l'efficacité dudit programme (folpel) par rapport à l'association de référence foséthyl-Al + folpel. En effet, on obtient le même nombre de feuilles tachées mais à concentration en ions phosphite six fois moindre dans le cas de l'invention ; en outre, pour cette même concentration en ions phosphite six fois moindre, le nombre de taches passe de 9,4 à 5,2 (classement respectif b et a).

Exemple 4 : étude in vitro de l'effet curatif

Il a été procédé à une comparaison entre l'efficacité curative de la préparation 3 et celle de l'Aliette (foséthyl-Al à 80%).

L'Aliette a été pris comme composé de référence du fait qu'il est décrit comme étant "*une molécule agissant préventivement* et *curativement en inhibant la germination des spores,* ou *en bloquant le développement du mycélium de nombreux champignons, principalement (...) Plasmopara, Phytophtora, Bremia.*"

Quatre essais de laboratoire ont été mis en place suivant les méthodes de criblage classiques :

- sur Pseudoperospora cubensis du concombre (2 essais)
- sur Phytophtora de la tomate (1 essai)
- sur Plasmopara viticola de la vigne (1 essai)

en procédant à une application du produit testé 24 heures après la contamination.

Les résultats, à la dose de 1000 ppm de matière active, exprimés en % d'efficacité d'intensité par rapport à un témoin non traité, sont résumés dans le tableau ci-dessous :

| | % d'efficacité d'intensité par rapport au témoin [1] | | Pourcentage d'attaque du végétal |
|---|---|---|---|
| | Référence (Aliette) | Préparation 3 | non traité (témoin) [2] |
| Concombre Essai 1 | 52 % | 98 % | 31 % |
| Concombre Essai 2 | 39 % | 92 % | 92 % |
| Tomate | 55 % | 82 % | 42 % |
| Vigne | 53 % | 97 % | 100 % |
| (1) c'est-à-dire [(100 % - Pourcentage d'attaque du végétal non traité)/Pourcentage d'attaque du végétal traité] (2) c'est-à-dire pourcentage de la surface des feuilles affectée par la maladie | | | |

Comme il ressort de ces résultats, l'Aliette, c'est-à-dire le foséthyl-Al, n'offre qu'un niveau médiocre de curativité, d'ailleurs bien connu dans la pratique, tandis que la préparation 3 selon l'invention offre des résultats brillants pour ce qui est de stopper la contamination.

Exemple 5 : Essai sur le terrain comme produit "stop mildiou" pour la vigne

L'arsenal phytosanitaire n'a pas, jusqu'ici, reconnu l'existence d'un produit "stop mildiou" en viticulture. Aucun produit connu ne peut donc être utilisé comme référence pour effectuer une comparaison d'activité.

L'essai a été effectué dans le Roussillon (France) au cours de l'été 2000.

La parcelle de vigne concernée par l'essai a été laissée sans traitement jusqu'au 26 Juillet, alors qu'à cette date, les parcelles environnantes étaient sous traitement anti-mildiou depuis un mois.

Le 26 Juillet, la parcelle testée a reçu un traitement à base de folpel à raison de 1000 g de matière active par hectare et de la préparation 3 à raison de 3 litres (environ 1000 ppm) par hectare.

Le même traitement a été renouvelé le 2 Août.

Le 9 Août, on a appliqué un traitement à base de folpel à raison de 1000 g de matière active par hectare et de la préparation 3 à raison de 1 litre (environ 333 ppm) par hectare, reprenant ainsi le programme au rythme normal de 14 jours.

L'état de la vigne est apprécié le 18 Août en évaluant la surface occupée par les taches de mildiou sur les feuilles de la vigne et les résultats, exprimés en % d'intensité d'attaque de la maladie, sont donnés dans le tableau suivant :

| | % Attaque de la maladie |
|---|---|
| Témoin non traité | 37,65 % |
| Vigne traitée au folpel + Préparation 3 | 0,65 % |

Comme il ressort de ce tableau, la maladie a été pratiquement stoppée par le traitement, comme le confirme l'étude des taches de mildiou totalement blanchies sur feuilles - et ce, en deux semaines et demie - alors que le mildiou a continué à se développer sur le témoin non traité.

Exemple 6 : Essai sur le terrain comme produit "stop oïdium"

Des essais comparatifs ont été effectués, dans le Roussillon, (France), sur de la vigne où Uncicula necator était très développé, ce, début Septembre 2001. Après application, le 3 Septembre 2001, de la Préparation 3, respectivement de 1, 2 et 3 litres/ha et de la référence officielle pour l'oïdium de la vigne, à savoir le soufre, les résultats ont été relevés, le 18 Septembre. Pour ce faire, on compte, par unité de surface, le nombre de cleistothèces qui sont les organes de conservation de la maladie.

Les résultats obtenus sont rapportés dans le tableau suivant.

| Traitement | Dose | Nombre de cleistothèces par $cm^2$ |
|---|---|---|
| Témoin non traité[1] | - | 29,2 |
| Préparation 3 | 1 l/ha | 23,1 |
| Préparation 3 | 2 l/ha | 11,3 |
| Préparation 3 | 3 l/ha | 1,7 |
| Référence (soufre) | 10 kg/ha | 0,4 |
| [1] Moyenne de 5 témoins | | |

De nombreuses observations de terrain indiquent que ce phénomène est général dès la concentration de 1 litre/ha lorsque la Préparation 3 est utilisée en complémentaire de fongicides anti-oïdium ou à action secondaire sur l'oïdium.

Compte tenu de son activité, la composition utilisée selon l'invention pourra, en association avec un programme fongicide, être utilisée en une quantité inférieure de l'ordre de 250 à 400 g (poids exprimé en $PO_3^-$) par hectare pour les traitements classiques des cultures susceptibles d'être attaquées par le mildiou et/ou de l'oïdium, et maladies voisines, et en une quantité pouvant être supérieure à la gamme précitée mais en tout cas inférieure ou égale à 750g/ha pour les traitements stop mildiou et/ou oïdium, en particulier grâce à son potentiel d'efficacité curative, que ce soit en emploi extemporané ou en association prête à l'emploi avec d'autres fongicides.

## Revendications

1. Utilisation, pour la lutte contre les maladies cryptogamiques des plantes, d'une composition à base d'acide phosphoreux à l'état libre et de phosphite acide de potassium dans une gamme de rapport de concentration telle que la composition a un pH compris entre 1 et 3, en association avec un ou plusieurs fongicides stables ou stabilisés au pH concerné.

2. Utilisation selon la revendication 1, **caractérisée en ce que** ladite composition sert d'adjuvant pour ledit au moins un fongicide.

3. Utilisation selon la revendication 1 ou 2, **caractérisée en ce que** ledit au moins un fongicide est le folpel.

4. Utilisation selon l'une quelconque des revendications 1 à 3, **caractérisée en ce que** ladite composition et ledit au moins un fongicide sont mélangés et servent d'adjuvant pour bouillie.

5. Utilisation selon l'une quelconque des revendications 1 à 4, **caractérisée en ce que** la quantité appliquée de ladite composition est de l'ordre de 250 à 400 g (poids exprimé en $PO_3^-$) par hectare pour traiter des cultures susceptibles d'être attaquées par le mildiou et/ou l'oïdium.

6. Utilisation selon l'une quelconque des revendications 2 à 4, **caractérisée en ce que** la quantité appliquée de ladite composition est inférieure ou égale à 750 g (poids exprimé en $PO_3^-$) par hectare pour un traitement stop de cultures attaquées par le mildiou et/ou l'oïdium.

## Claims

1. Use, for fighting plant cryptogamic diseases, of a composition based on free phosphorous acid and potassium acid phosphite according to a concentration ratio range such that the pH of the composition is between 1 and 3, in association with one or more fungicide(s) stable, or stabilized, at the involved pH.

2. Use according to claim 1, **characterized in that** said composition acts as an adjuvant for the said at least one fungicide.

3. Use according to claim 1 or 2, **characterized in that** the said at least one fungicide is folpel.

**4.** Use according to any one of claims 1 to 3, **characterized in that** said composition and the said at least one fungicide are mixed and act as an adjuvant for a slurry.

**5.** Use according to any one of claims 1 to 4, **characterized in that** the applied amount of said composition is about 250 to 400 g (weight expressed as $PO_3^-$) per hectare for treating cultures sensitive to downy mildew and/or oidium infestation.

**6.** Use according to any one of claims 2 to 4, **characterized in that** the applied amount of said composition is less than, or equal to, 750 g (weight expressed as $PO_3^-$) per hectare for stopping infestation in crops infested by downy mildew and/or oidium.

**Patentansprüche**

**1.** Verwendung einer Zusammensetzung auf der Basis von phosphoriger Säure im freien Zustand und saurem Kaliumphosphit in einem solchen Konzentrationsverhältnisbereich, dass die Zusammensetzung einen pH-Wert zwischen 1 und 3 aufweist, in Kombination mit einem oder mehreren bei dem betreffenden pH-Wert stabilen oder stabilisierten Fungiziden für die Bekämpfung der kryptogamen Krankheiten der Pflanzen.

**2.** Verwendung nach Anspruch 1, **dadurch gekennzeichnet, dass** die Zusammensetzung als Adjuvans für dieses mindestens eine Fungizid dient.

**3.** Verwendung nach Anspruch 1 oder 2, **dadurch gekennzeichnet, dass** dieses mindestens eine Fungizid Folpel ist.

**4.** Verwendung nach einem der Ansprüche 1 bis 3, **dadurch gekennzeichnet, dass** die Zusammensetzung und das mindestens eine Fungizid gemischt sind und als Adjuvans für Brei dienen.

**5.** Verwendung nach einem der Ansprüche 1 bis 4, **dadurch gekennzeichnet, dass** die angewandte Menge der Zusammensetzung etwa 250 bis 400 g (in $PO_3$ ausgedrücktes Gewicht) pro Hektar beträgt, um Kulturen zu behandeln, die von falschem Mehltau und/oder echtem Mehltau befallen sein können.

**6.** Verwendung nach einem der Ansprüche 2 bis 4, **dadurch gekennzeichnet, dass** die angewandte Menge der Zusammensetzung kleiner als oder gleich 750 g (in $PO_3$ ausgedrücktes Gewicht) pro Hektar für eine Stopbehandlung von mit falschem und/oder echtem Mehltau befallenen Kulturen ist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5997910 A
- WO 0076941 A
- FR 2252056 A
- FR 2256056

**Littérature non-brevet citée dans la description**

- **RAMACHANDRAN N. et al.** Effect of pH on in vitro activity of fosethyl-Al on phytophthora palmivora. *l'effet du pH sur l'activité du foséthyl-Al*
- **CHAZALET M. et al.** Results of experiments using ethyl phosphites against various vine diseases. *l'effet synergique du foséthyl-A1 et du folpel*